Europäisches Patentamt

European Patent Office

Office européen des brevets

(11) Veröffentlichungsnummer: **0 194 540**

**A2**

(12) **EUROPÄISCHE PATENTANMELDUNG**

(21) Anmeldenummer: **86102710.0**

(22) Anmeldetag: **01.03.86**

(51) Int. Cl.⁴: **H 02 K 5/173**

(30) Priorität: **13.03.85 DE 3508871**

(43) Veröffentlichungstag der Anmeldung:
**17.09.86 Patentblatt 86/38**

(84) Benannte Vertragsstaaten:
**BE CH DE FR GB IT LI NL SE**

(71) Anmelder: **Deutsche Vortex GmbH**
**Erkelenzer Strasse 34**
**D-4050 Mönchengladbach 5(DE)**

(72) Erfinder: **Schmidt, Hans-Dieter**
**Wunnensteinstrasse 16/3**
**D-7148 Remseck 3(DE)**

(74) Vertreter: **Möhrke, Dieter, Dipl.-Ing.**
**Blumenberger Strasse 143/145**
**D-4050 Mönchengladbach 1(DE)**

(54) **Rotor und Rotorträger eines Elektromotors mit sphärischem Luftspalt.**

(57) Der Rotor (1) weist in seinem Inneren einen ringförmigen konzentrischen Vorsprung (16) auf. Der Rotorträger (10a) besitzt ebenfalls einen ringförmigen konzentrischen Vorsprung (17), der in dem Raum zwischen dem Vorsprung (16) und der Lagerkugel (8) angeordnet ist. Der Innendurchmesser des Vorsprungs (16) ist kleiner als der Außendurchmesser des Vorsprungs (17). Mindestens einer der beiden Vorsprünge (17) besteht aus elastisch verformbarem Werkstoff. Die Vorsprünge (16, 17) Können Teile von Hülsen (13, 14a) sein, wobei die den Vorsprung (16) besitzende Hülse (13) an ihrem unteren Ende (15) konisch aufgeweitet ist. Die Anodnung verhindert das Abheben des Rotors (1) und dämpft Taumel- oder Präzessionsbewegungen. Außerdem gestattet die Anordnung eine einfache kraft- und formschlüssige Befestigung der Lagerkugel (8) am Rotorträger (10a).

FIG. 2

EP 0 194 540 A2

Rotor und Rotorträger eines Elektromotors mit sphärischem
Luftspalt

Die Erfindung betrifft den Rotor und den Rotorträger eines
Elektromotors mit sphärischem Luftspalt zwischen Rotor und
einem ein Drehfeld erzeugenden Stator, mit einer vom Rotorträger getragenen Lagerkugel im Zentrum des sphärischem Luftspalts und einer sich relativ zur Lagerkugel drehenden, mit
dem Rotor verbundenen Lagerpfanne.

Bei Elektromotoren mit sphärischem Luftspalt benötigt der Rotor nur ein einziges, zentrales Lager, das durch Kugel und
Pfanne gebildet ist.

Solange die magnetischen Kräfte ausreichend groß sind und solange keine nennenswerte Präzession des Rotors auftritt,
stützt sich der Rotor über das Lager gegen den Rotorträger ab.

Beim Nachlassen oder Aufhören der magnetischen Kräfte, zum
Beispiel nach Abschalten des Stromes, hebt der Rotor von der
Lagerkugel ab, was zu Lärmentwicklung und Verschleiß führt.

Um dieses Abheben des Rotors zu vermeiden, ist es bereits bekannt, eine elastische Lagerpfanne zu verwenden, die die Lagerkugel bis über den Äquator hinaus umschließt und deren Öffnung kleiner ist als der Durchmesser der Lagerkugel. Präzessionsbewegungen sollen dabei durch eine mit der Lagerkugel in
Kontakt kommende Kunststoffhülse gedämpft und abgefangen werden.

Die Resultate der bekannten Maßnahmen sind unbefriedigend,
weil die elastische Lagerpfanne das Einhalten des Luftspalts
nicht gewährleisten kann und weil die einen kleinen Durchmes-

0184540

12.3.1985

ser aufweisende Kunststoffhülse, welche die Präzessionsbewegungen dämpfen soll, zu schnell verschleißt.

Der Erfindung liegt die Aufgabe zugrunde, zuverlässig und verschleißarm das Abheben des Rotors zu verhindern, Präzessionsbewegungen des Rotors abzufangen und zu dämpfen, Lärmentwicklung zu mindern und dabei die elektrischen und elektromagnetischen Werte des Elektromotors nicht zu beeinträchtigen.

Gemäß der Erfindung wird diese Aufgabe dadurch gelöst, daß der
Rotor in seinem Inneren einen ringförmigen konzentrischen Vorsprung aufweist, daß der Rotorträger ebenfalls einen ringförmigen konzentrischen Vorsprung besitzt, der in den Raum zwischen dem Vorsprung des Rotors und der Lagerkugel angeordnet
ist, und daß der Innendurchmesser des Vorsprungs des Rotors
kleiner ist als der Außendurchmesser des mit dem Rotorträger
verbundenen Vorsprungs.

Wenn nun nach dem Ausschalten des Stromes der Rotor zu taumeln
beginnt, berühren sich die beiden Vorsprünge und verhindern
dadurch nicht nur das Abheben des Rotors, sie begrenzen auch
Taumel- beziehungsweise Präzessionsbewegungen.

Nach einer weiteren Ausbildung der Erfindung ist vorgesehen,
daß mindestens einer der beiden überlappenden Vorsprünge aus
einem elastisch verformbaren Werkstoff besteht. Eine solche
Ausbildung hat den Vorteil, daß bei der Montage der Vorsprung
des Rotors über den Vorsprung des Rotorträgers geklipst werden
kann.

Nach einer weiteren AUsbildung der Erfindung ist der Vorsprung
des Rotors Teil einer konzentrischen, in eine konzentrische
Bohrung des Rotos eingesetzten Hülse und der andere Vorsprung
ebenfalls ein Teil einer konzentrischen, mit dem Rotorträger
verbundenen Hülse, wobei die in die konzentrische Bohrung des Rotors eingesetzte Hülse an ihrem unteren Ende konisch aufgeweitet ist. Infolge dieser konischen Aufweitung findet bei Präzessionsbewegungen oder Taumelbewegungen des Rotors eine Linienberührung zwischen den beiden Hülsen statt. Die Länge der Berührungslinie ist abhängig von der Länge des konischen Teils der einen Hülse. Der Verschleiß durch wechselseitige Berührung der Hülsen ist hierbei äußerst gering.

Nach einer weiteren Ausbildung der Erfindung ist vorgesehen, daß die den Vorsprung des Rotorträgers aufweisende Hülse nur an ihrem unteren Ende Kontakt mit dem Rotorträger hat. Die elastische Verformbarkeit des Vorsprungs dieser Hülse wird hierdurch begünstigt, zumal dann, wenn nicht nur der Vorsprung, sondern die ganze Hülse aus elastisch verformbarem Werkstoff besteht.

Nach einer weiteren Ausbildung der Erfindung weist der Rotorträger an seinem einen Ende einen bis über den Äquator hinausreichenden, die Lagerkugel umklammernden Rand auf. Eine solche Befestigung der Lagerkugel durch Preßsitz am Rotorträger ist besonders vorteilhaft, weil hierbei die hochglanzpolierte und gehärtete Kugel nicht durch ein Lötmittel verunreinigt werden kann. Die vorteilhafte Befestigung ist eine direkte Folge der erfindungsgemäßen Anordnung der Vorsrpünge, weil präzessionsdämpfende Mittel nicht mehr, wie das beim Stand der Technik der Fall ist, an der Lagerkugel angreifen.

Zwei Ausführungsbeispiele der Erfindung sind in den Zeichnungen dargestellt. Die Erfindung wird anhand dieser Ausführungsbeispiele näher beschrieben und erläutert.

Fig. 1 zeigt einen Schnitt durch einen ersten,

Fig. 2 durch einen zweiten Rotor.

VO-4
0194540 L
SPT W10/L
12.3.1985

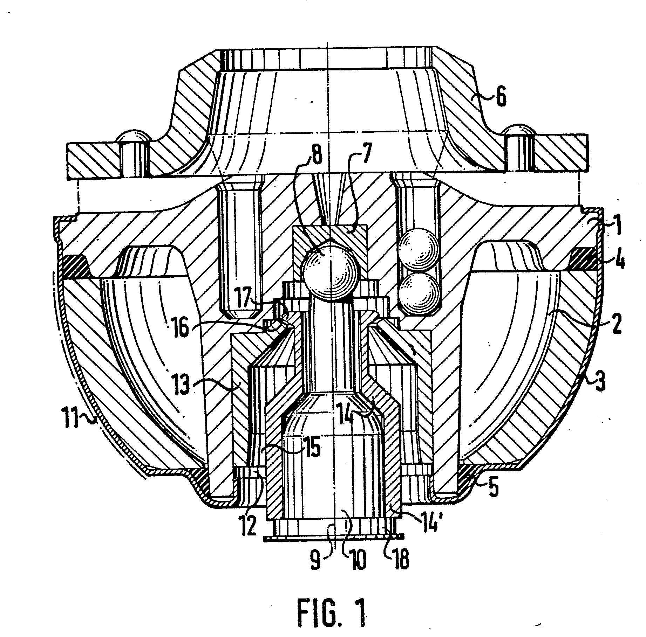

Gemäß Fig. 1 trägt der Rotor 1 eine magnetisch aktive Kalotte 2, bestehend aus Sintereisen. Durch eine kugelschalenförmige Haube 3 aus magnetisch durchlässigem Material ist die Kalotte 2 unter Beilage von Dichtringen 4 und 5 mit dem Grundkörper des Rotors 1 verklammert. Ein Pumpenlaufrad 6 ist auf den Grundkörper des Rotors 1 aufgenietet, weil bei diesem Ausführungsbeispiel eine Baueinheit von Pumpe und Motor vorgesehen ist.

In eine zentrale Bohrung des Rotors 1 ist eine Lagerpfanne 7 eingesetzt, in der eine Lagerkugel 8 gelagert ist. Durch Löten ist die Lagerkugel 8 an einem in der Rotationsachse 9 angeordneten Rotorträger 10 befestigt.

Zwischen dem Rotor 1 und dem hier nicht dargestellten Stator des ebenfalls nicht näher dargestellten Elektromotors ist ein sphärischer Luftspalt 11 ausgebildet. Die Lagerkugel 8 befindet sich im Zentrum des sphärischen Luftspalts 11.

In eine konzentrische Bohrung 12 des Rotors 1 ist eine Hülse 13 eingesetzt, die an ihrem unteren Ende 15 konisch aufgeweitet ist. Am oberen Ende bildet die Hülse 13 einen ringförmigen konzentrischen Vorsprung 16.

Der Rotorträger 10 trägt ebenfalls eine konzentrische Hülse 14, die nur an ihrem unteren Teil 14' Kontakt mit dem Rotorträger 10 hat. Oben endet die Hülse 14 in einem ringförmigen konzentrischen Vorsprung 17, der in dem Raum zwischen dem Vorsprung 16 des Rotors 1 und der Lagerkugel 8 angeordnet ist. Der Innendurchmesser des Vorsprungs 16 des Rotors 1 ist kleiner als der Außendurchmesser des mit dem Rotorträger 10 verbundenen Vorsprungs 17. In Normallage, die Fig. 1 zeigt, ist zwischen den beiden Vorsprüngen 16 und 17 ein kleiner Abstand vorhanden.

Die Hülse 14 mit ihrem Vorsprung 17 besteht aus elastisch verformbarem Werkstoff. Die Hülse 13 mit ihrem Vorsprung 16 besteht aus einem nicht elastisch verformbaren Werkstoff.

Der Fuß 18 des Rotorträgers 10 ist mit dem hier nicht näher
dargestellten Elektromotor verbunden, so daß der Rotorträger
10 mit dem Elektromotor gehäusefest verbunden ist.

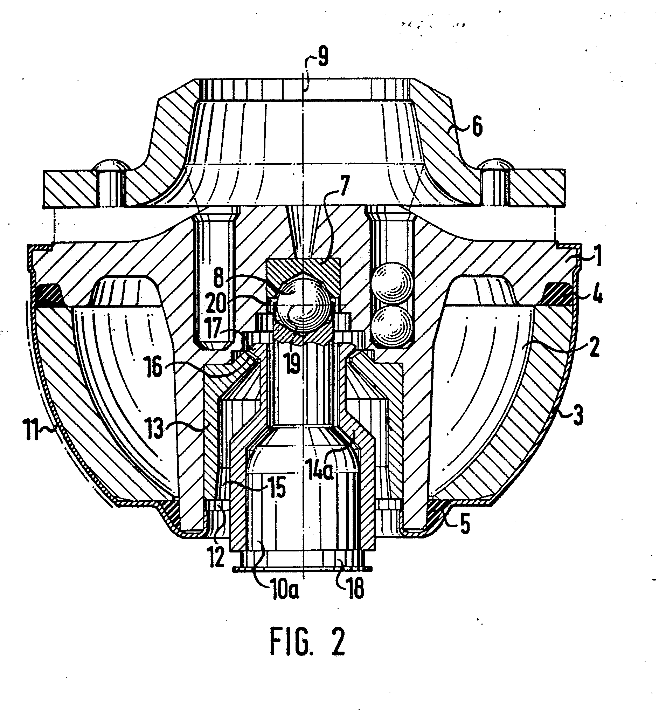

Die Ausbildung nach Fig. 2 unterscheidet sich von der Ausbildung nach Fig. 1 durch folgendes:

Der Rotorträger 10a und die mit dem Rotorträger verbundene
Hülse 14a haben größere Durchmesser als die entsprechenden
Teile des ersten Ausführungsbeispiels. Der Rotorträger 10a
weist an seinem oberen Ende einen bis über den Äquator 19 hinausreichenden, die Lagerkugel 8 umklammernden Rand 20 auf. Bedingt durch den größeren Durchmesser 14a sind Taumel- oder
Präzessionsbewegungen des Rotors 1 noch weiter eingeschränkt
als bei dem ersten Ausführungsbeispiel.

- . -

Patentansprüche:

1. Rotor und Rotorträger eines Elektromotors mit sphärischem Luftspalt zwischen Rotor und einem ein Drehfeld erzeugenden Stator, mit einer vom Rotorträger getragenen Lagerkugel im Zentrum des sphärischen Luftspalts und einer sich relativ zur Lagerkugel drehenden, mit dem Rotor verbundenen Lagerpfanne, dadurch g e k e n n z e i c h n e t, daß der Rotor (1) in seinem Inneren einen ringförmigen konzentrischen Vorsprung (16) aufweist, daß der Rotorträger (10, 10a) ebenfalls einen ringförmigen konzentrischen Vorsprung (17) besitzt, der in dem Raum zwischen dem Vorsprung (16) des Rotors (1) und der Lagerkugel (8) angeordnet ist, und daß der Innendurchmesser des Vorsprungs (16) des Rotors (1) kleiner ist als der Außendurchmesser des mit dem Rotorträger (10) verbundenen Vorsprungs (17).

2. Rotor und Rotorträger nach Anspruch 1, dadurch gekennzeichnet, daß mindestens einer der beiden einander überlappenden Vorsprünge (17) aus einem elastisch verformbaren Werkstoff besteht.

3. Rotor und Rotorträger nach Anspruch 1 oder 2, dadurch gekennzeichnet, daß der Vorsprung (16) des Rotors (1) ein Teil einer konzentrischen, in eine konzentrische Bohrung (12) des Rotos (1) eingesetzten Hülse (13) ist, daß der andere Vorsprung (17) ebenfalls ein Teil einer konzentri-

0194540

12.3.1985

schen, mit dem Rotorträger (10, 10a) verbundenen Hülse (14, 14a) ist, und daß die in die konzentrische Bohrung (12) des Rotors (1) eingesetzte Hülse (13) an ihrem unteren Ende (15) konisch aufgeweitet ist.

4. Rotor und Rotorträger nach Anspruch 3, dadurch gekennzeichnet, daß die den Vorsprung (17) des Rotorträgers (10, 10a) aufweisende Hülse (14, 14a) nur an ihrem unteren Ende (14') Kontakt mit dem Rotorträger (10, 10a) hat.

5. Rotor und Rotorträger nach einem der Ansprüche 1 bis 4, dadurch gekennzeichnet, daß der Rotorträger (10a) an seinem einen Ende einen bis über den Äquator (19) hinausreichenden, die Lagerkugel (8) umklammernden Rand (20) aufweist.

FIG. 1

FIG. 2